(19) Europäisches Patentamt
European Patent Office
Office européen des brevets

(11) **EP 2 517 873 A1**

(12) **EUROPEAN PATENT APPLICATION**
published in accordance with Art. 153(4) EPC

(43) Date of publication:
**31.10.2012 Bulletin 2012/44**

(21) Application number: **10839328.1**

(22) Date of filing: **14.12.2010**

(51) Int Cl.:
***B32B 5/32*** (2006.01)　　　***H01M 2/16*** (2006.01)

(86) International application number:
**PCT/JP2010/072841**

(87) International publication number:
**WO 2011/078098 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2009 JP 2009292267**

(71) Applicant: **Sumitomo Chemical Company, Limited
Tokyo 104-8260 (JP)**

(72) Inventors:
• **SHINOHARA, Yasuo
Tsuchiura-shi
Ibaraki 300-4111 (JP)**

• **YASHIKI, Daizaburo
Niihama-shi
Ehime (JP)**
• **SATO, Hiroyuki
Niihama-shi
Ehime 792-0009 (JP)**

(74) Representative: **Brunetti, Fabrizio et al
Cabinet Beau de Loménie
158, rue de l'Université
75340 Paris Cedex 07 (FR)**

(54) **LAMINATED FILM, AND NONAQUEOUS ELECTROLYTE SECONDARY BATTERY**

(57)　　The present invention provides a laminated film and a non-aqueous electrolyte secondary battery. The laminated film has a structure in which a porous film having a shutdown function, a heat resistant porous layer containing plate-like inorganic particles and a binder, and a protective porous layer are stacked on each other in this order. The non-aqueous electrolyte secondary battery comprises a positive electrode, a negative electrode, a separator located between the positive electrode and the negative electrode, and an electrolyte, wherein the separator is the above-mentioned laminated film.

EP 2 517 873 A1

**Description**

**TECHNICAL FIELD**

The present invention relates to a laminated film and a non-aqueous electrolyte secondary battery. The present invention particularly relates to a laminated film useful as a separator, and a non-aqueous electrolyte secondary battery using the film as a separator.

**BACKGROUND ART**

A separator is a film having micropores. The separator is located between a positive electrode and a negative electrode of a non-aqueous electrolyte secondary battery such as a lithium ion secondary battery and a lithium polymer secondary battery. The non-aqueous electrolyte secondary battery is produced by stacking a positive electrode sheet, a separator, a negative electrode sheet and a separator in this order and winding the resultant to obtain an electrode group, storing the electrode group in a battery case, and then injecting a non-aqueous electrolyte solution into the battery case.

A separator in a non-aqueous electrolyte secondary battery is demanded to have a function of interrupting current to inhibit excessive current from flowing, i.e., a shutdown function, when abnormal current flows in a battery due to, for example, the short circuit between the positive electrode and the negative electrode. The separator shutdowns by blocking micropores when exceeding the normal use temperature of a battery. The temperature in the battery may be raised even after shutdown. The separator is also being demanded to maintain the shutdown state without breaking a film by the temperature even if the temperature in the battery is raised to a certain level of high temperature, in other words, to have high heat resistance.

As a conventional separator, Patent Document 1 discloses a laminated film in which a heat resistant porous layer containing an inorganic filler is laminated on at least one surface of the polyethylene porous film having a shutdown function. Specifically, a dispersion in which an inorganic filler and a polyvinyl alcohol as a binding agent are dispersed in water is applied on the surface of the porous film, and water is removed by drying, to laminate a heat-resistant porous layer on a polyethylene porous film.

Prior Art Document

Patent Document

Patent Document 1: JP2009-143060A

**DISCLOSURE OF THE INVENTION**

When the above-mentioned winding is performed using the above-mentioned laminated film as a separator, it is difficult to wind with a positive electrode sheet, a separator and a negative electrode sheet closed each other since the friction force between the sheets is large. As a result, the degradation of the battery characteristics such as cycle performance or the like of the discharge capacity of the resultant battery tends to occur. An object of the present invention is to provide a laminated film extremely useful as a separator providing a non-aqueous electrolyte secondary battery having a shutdown function, which is superior in heat resistance and superior in battery characteristics.

The present invention provides the following means.

<1> A laminate film in which a porous film having a shutdown function, a heat resistant porous layer containing plate-like inorganic particles and a binder, and a protective porous layer are stacked on each other in this order.

<2> The laminate film according to <1>, wherein the heat resistant porous layer contains the plate-like inorganic particles in a ratio of not less than 50vol% and less than 100vol% to the total volume of the plate-like inorganic particles and the binder.

<3> The laminate film according to <1> or <2>, wherein the plate-like inorganic particles have an aspect ratio of from 10 to 100.

<4> The laminate film according to any one of <1> to <3>, wherein the protective porous layer consists of particles.

<5> The laminate film according to <4>, wherein the protective porous layer consists of particles having an average particle diameter of from 0.01 $\mu$m to 3 $\mu$m.

<6> The laminate film according to any one of <1> to <5>, wherein the protective porous layer has a porosity of from 30vol% to 80vol%.

<7> The laminate film according to any one of <1> to <6>, wherein the porous film has the thickness of from 13 $\mu$m to 17 $\mu$m.

<8> The laminate film according to any one of <1> to <7>, wherein the heat resistant porous layer has the thickness of from 1 $\mu$m to 10 $\mu$m.

<9> The laminate film according to any one of <1> to <8>, wherein the protective porous layer has the thickness of from 0.02 $\mu$m to 5 $\mu$m.

<10> The laminate film according to any one of <1> to <9>, wherein the laminate film is a separator.

<11> A non-aqueous electrolyte secondary battery comprising a positive electrode, a negative electrode, a separator located between the positive electrode and the negative electrode, and an electrolyte, wherein the separator is the laminate film according to any one of <1> to <9>.

<12> The non-aqueous electrolyte secondary battery according to <11>, wherein the protective porous layer of the laminate film is located on the side where the positive electrode is.

## MODE FOR CARRYING OUT THE INVENTION

The laminated film of the present invention is a laminated film in which a porous film having a shutdown function, a heat resistant porous layer containing plate-like inorganic particles and a binder, and a protective porous layer are stacked on each other in this order.

<Porous Film>

The porous film in the present invention has a shutdown function. In order that the porous film has a shutdown function in a non-aqueous electrolyte secondary battery, the material of the porous film is a material that softens preferably at 80 to 180°C. The material of the porous film is preferably polyolefin such as polyethylene and polypropylene. Polyethylene is more preferable from the viewpoint of softening at lower temperature to shutdown. Specific examples of polyethylene include polyethylene such as low-density polyethylene, high-density polyethylene and linear polyethylene, and also include an ultrahigh molecular weight polyethylene with a molecular weight of 1,000,000 or more. In order to further increase the piercing strength of the porous film, it is preferred that the porous film contain an ultrahigh molecular weight polyethylene. From the viewpoint of the production of the porous film, it may be preferred the porous film contain a wax consisting of polyolefin with low molecular weight (a weight average molecular weight of 10,000 or less).

The porous film has micropores. The size of the pores (diameter) is usually 3 $\mu$m or less and preferably 1 $\mu$m or less. The porous film usually has a porosity of from 30vol% to 80vol% and preferably from 40vol% to 70vol%. When the temperature of the non-aqueous electrolyte secondary battery exceeds the normal use temperature, the porous film can block micropores by softening of the material constituting the porous film.

The porosity of the porous film can be determined by the following formula (1).

$$Pv_1 \ (\%) \ = \ \{(Va_1 \ - \ Vt_1)/Va_1\} \ \times \ 100 \qquad (1)$$

$Pv_1$ (%): Porosity of Porous Film (vol%)
$Va_1$: Apparent Volume of Porous Film
$Vt_1$: Theoretical Volume of Porous Film

Herein, $Va_1$ can be calculated by the values of the length, width and thickness of the porous film, and $Vt_1$ can be calculated by the values of the weight of the porous film, weight ratio of the constituent materials and true specific gravity of each constituent material.

The porous film usually has the thickness of from 3 $\mu$m to 30 $\mu$m, preferably from 3 $\mu$m to 25 $\mu$m, and more preferably from 13 $\mu$m to 17 $\mu$m. The thickness is set to from 13 $\mu$m to 17 $\mu$m, whereby a thin film can be obtained, in particular, without impairing the strength of the porous film.

<Method for Producing Porous Film>

The method for producing a porous film is not particularly limited. Examples include a method of adding a plasticizer to a thermoplastic resin to form a film and then removing the plasticizer by an appropriate solvent, as described in JP7-29563A, and a method of selectively stretching an amorphous portion that is weak in the structure of a film to be used consisting of the thermoplastic resin produced according to a known method, to form micropores, as described in JP7-304110A.

When the porous film is formed from a polyolefin resin containing an ultrahigh molecular weight polyethylene and a low molecular weight polyolefin with a weight average molecular weight of 10,000 or less, the porous film is preferably produced according to the method as shown below, from the viewpoint of the production cost. More specifically, the method includes the steps of:

(1) kneading 100 parts by weight of an ultrahigh molecular weight polyethylene, 5 to 200 parts by weight of a low molecular weight polyolefin with a weight average molecular weight of 10,000 or less, and 100 to 400 parts by weight of an inorganic filler, to obtain a polyolefin resin composition,
(2) forming the polyolefin resin composition to obtain a sheet,
(3) removing the inorganic filler from the sheet obtained in step (2) and
(4) stretching the sheet obtained in step (3) to obtain a porous film,

or the method includes the steps of:

(1) kneading 100 parts by weight of an ultrahigh molecular weight polyethylene, 5 to 200 parts by weight of a low molecular weight polyolefin with a weight average molecular weight of 10,000 or less, and 100 to 400 parts by weight of an inorganic filler, to obtain a polyolefin resin composition,
(2) forming the polyolefin resin composition to obtain a sheet,
(3) stretching the sheet obtained in step (2) to obtain a stretched sheet, and
(4) removing the inorganic filler from the stretched sheet obtained in step (3) to obtain a porous film.

From the viewpoint of being capable of further lowering the shutdown temperature of the laminated film, the former method, i.e., the method of removing the inorganic filler of the sheet and then stretching to obtain a porous film is preferable.

From the viewpoint of the strength of the porous film and the lithium ion permeability, the inorganic filler has an average particle diameter of preferably 0.5 $\mu$m or less and further preferably 0.2 $\mu$m or less. Herein, the average particle diameter of the inorganic filler is a value of $D_{50}$ on a volumetric basis determined by measurement using a laser diffraction particle size analyzer.

Examples of the inorganic filler include calcium carbonate, magnesium carbonate, barium carbonate, zinc oxide, calcium oxide, aluminum hydroxide, magnesium hydroxide, calcium hydroxide, calcium sulfate, silicic acid, zinc oxide, calcium chloride, sodium chloride, and magnesium sulfate. These inorganic fillers can be removed from a sheet or film by being in contact with an acid or alkali solution and dissolved. Calcium carbonate is preferable since one with a fine particle diameter is easily available.

The method for producing the polyolefin resin composition is not particularly limited. The materials constituting a polyolefin resin composition, such as a polyolefin resin and an inorganic filler, are mixed using a mixer such as a roller, a Banbury mixer, a single screw extruder, and a twin screw extruder, to obtain a polyolefin resin composition. When the constituent materials are mixed, additives such as a fatty acid ester and a stabilizer, an antioxidant, an ultraviolet absorber and a flame retardant may be added to the constituent materials as necessary.

The method for producing a sheet made from the polyolefin resin composition is not particularly limited. The method includes sheet forming methods such as inflation processing, calendar processing, T-die extrusion, and a scaif method. The following method is preferable since a sheet having higher film thickness accuracy is obtained.

The preferable method for producing a sheet consisting of a polyolefin resin composition is a method of roll forming a polyolefin resin composition using a pair of rotary forming tools, and the surface temperature of the tools is adjusted to be higher than the highest melting point of the polyolefin resin constituting the polyolefin resin composition. The surface temperature of the rotary forming tools is preferably a temperature of the melting point plus 5°C or more. Also, the upper limit of the surface temperature is preferably a temperature of the melting point plus 30°C or less and further preferably a temperature of the melting point plus 20°C or less. The pair of rotary forming tools includes rollers and belts. The peripheral velocities of the pair of rotary forming tools need not be strictly the same, and the difference therebetween of within about ±5% is tolerable. A porous film produced using the sheet obtained by such a method is superior in strength, lithium ion permeability, air permeability and the like. A plurality of sheets each of which is obtained by the above-described method may be laminated to produce a porous film.

When the polyolefin resin composition is roll formed by a pair of rotary forming tools, a strand-formed polyolefin resin composition discharged from an extruder may be directly introduced between the pair of rotary forming tools, and a polyolefin resin composition that has been once pelletized may be introduced.

The stretching described above can be performed using a tenter, roller, autograph or the like. From the viewpoint of air permeability of the porous film, the stretching ratio is preferably from 2 to 12 folds and more preferably from 4 to 10 folds. The stretching temperature is usually a temperature of the softening point or more and the melting point or less of the polyolefin resin composition, and is preferably at 80 to 115°C. When the stretching temperature is too low, the film may be likely to rupture during stretching, and when the stretching temperature is too high, air permeability and lithium ion permeability of the obtained film may be lowered. Heat setting is preferably performed after stretching. The heat set temperature is preferably a temperature less than the melting point of the polyolefin resin.

<Heat Resistant Porous Layer>

The heat resistant porous layer contains plate-like inorganic particles and a binder. The heat resistant porous layer is in contact with a porous film. Even if the porous film in a non-aqueous electrolyte secondary battery shutdowns, and then the temperature in the battery is further raised to a certain level of high temperature, the heat resistant porous layer can maintain the shutdown state without breaking the porous film. The heat resistant porous layer may be in contact with one surface of the porous film and laminated and may be in contact with both surfaces and laminated.

Examples of the material for the plate-like inorganic particles in the heat resistant porous layer include oxide-based ceramics such as alumina, silica, titania, zirconia, magnesia, ceria, yttria, zinc oxide and iron oxide; nitride-based ceramics such as silicon nitride, titanium nitride and boron nitride; ceramics such as boehmite, silicon carbide, light calcium carbonate, heavy calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth and silica sand; and a glass fiber. Plate-like particles made from any one of these materials may be used as the plate-like inorganic particles. All of these materials have melting points of above 200°C. These materials may be used alone or in combination with two or more kinds. The material is preferably one or more material selected from the group consisting of alumina, silica, boehmite, titania, kaolin clay, light calcium carbonate and magnesia. Two or more kinds of these may be used as a mixture. By using such plate-like inorganic particles, it becomes possible to increase the aperture and also to further increase the permeability of lithium ion while maintaining heat resistance of the heat resistant porous layer. Although the heat resistant porous layer may further contain particles other than the plate-like inorganic particles, for example, spherical particles or the like, the heat resistant porous layer is preferably made from virtually plate-like inorganic particles and a binder, from the viewpoint of maintaining the strength in thickness direction.

The average particle diameter of the plate-like inorganic particles is properly selected by taking into consideration easiness of forming a heat resistant porous layer and easiness of controlling the layer thickness, and the like. The plate-like inorganic particles have an average particle diameter of preferably from $0.01\mu$ m to 2 $\mu$m and more preferably from 0.01 $\mu$m to 0.5 $\mu$m. The average particle diameter of the plate-like inorganic particles is set to the above-mentioned range, whereby the heat resistant porous layer can be efficiently formed in more uniform layer thickness. In this case, the average particle diameter of the plate-like inorganic particles is a value of $D_{50}$ on a volume basis determined by measurement using a laser diffraction particle size analyzer.

The plate-like inorganic particles preferably have an aspect ratio of from 10 to 100, more preferably from 30 to 90. The aspect ratio of the plate-like inorganic particles is set to the above-mentioned range, whereby the strength in thickness direction can be properly maintained. The aspect ratio is a value determined by dividing the major axis of each of the plate-like inorganic particles by the thickness of the plate-like inorganic particles, and can be found through SEM observation. In the SEM observation, 50 pieces of plate-like inorganic particles are extracted at random, and the aspect ratios are found from these particles, whereby an averaged value is used as an aspect ratio.

The heat resistant porous layer contains a binder. The binder can bind plate-like inorganic particles to a porous film and can also bind particles constituting plate-like inorganic particles mutually with one another. When the protective porous layer set forth below consists of particles, the protective porous layer can be also bound to a heat resistant porous layer.

The binder is preferably insoluble in an electrolyte solution in a non-aqueous electrolyte secondary battery. Examples of a preferred binder include styrene-butadiene copolymers; cellulose compounds such as carboxymethylcellulose; ethylene-vinyl acetate copolymers; fluorine-containing resins such as polyvinylidene fluoride (hereinafter also referred to as PVdF) and polytetrafluoroethylene; and polyvinyl alcohol.

The heat resistant porous layer preferably contains the plate-like inorganic particles in a ratio of not less than 20vol% and less than 100vol%, more preferably in a ratio of not less than 50vol% and less than 100vol%, and further more preferably in a ratio of not less than 80vol% and less than 100vol%, to the total volume of the plate-like inorganic particles and the binder. In particular, by setting the volume ratio of the plate-like inorganic particles to not less than 80vol% and less than 100vol%, it becomes possible to further increase permeability of lithium ion. From the viewpoint of balance between the heat resistance and the permeability of lithium ion, the thickness of the heat resistant porous layer is preferably from 1 $\mu$m to 10 $\mu$m, more preferably from 1 $\mu$m to 8 $\mu$m, and further preferably from 1 $\mu$m to 5 $\mu$m.

The porosity of the heat resistant porous layer can be appropriately set considering heat resistance, mechanical strength, permeability of lithium ion and the like, and is preferably from 30vol% to 85vol% and more preferably from 40vol% to 85vol%. The porosity of the heat resistant porous layer can be determined by the following formula (2).

$$Pv_2\ (\%)\ =\ \{(Va_2\ -\ Vt_2)/Va_2\}\ \times\ 100 \qquad (2)$$

$Pv_2$ (%): Porosity of Heat Resistant Porous Layer (vol%)
$Va_2$: Apparent Volume of Heat Resistant Porous Layer
$Vt_2$: Theoretical Volume of Heat Resistant Porous Layer

Herein, $Va_2$ can be calculated by the values of the length, width and thickness of the heat resistant porous film, and $Vt_2$ can be calculated by the values of the weight of the heat resistant porous film, weight ratio of the constituent materials and true specific gravity of each constituent material.

<Method for Forming Heat Resistant Porous Layer>

The heat resistant porous layer can be formed by applying plate-like inorganic particles and a binder on one surface or two of the surfaces of the porous film. A coating fluid in which plate-like inorganic particles and a binder are dispersed or dissolved in a solvent may be used. When the coating fluid is used, the coating fluid is applied on at least one surface of the porous film, then the solvent is removed by drying or the like, whereby a heat resistant porous layer can be obtained.

Examples of the solvent in the coating fluid include N-methylpyrrolidone (hereinafter also referred to as NMP), N,N-dimethylformamide, N,N-dimethylacetamide, water, ethanol, toluene, hot xylene, and hexane. For the dispersion stabilization and improvement in coatability of the coating fluid, additives such as a dispersant such as a surfactant; a thickener; a wetting agent; an antifoaming agent; and a pH adjusting agent including acid or alkali and the like may be added to the coating fluid. The additives are preferably removed during solvent removal. The additives may remain in the heat resistant porous layer, on the use of a non-aqueous electrolyte secondary battery, so long as they are electrochemically stable, do not inhibit a battery reaction and are stable up to 200°C or so. The heat resistant porous layer may contain components such as residue of the solvent used on the application or additives contained in the binder.

Examples of the method for producing a coating fluid, i.e., the method of dissolving or dispersing plate-like inorganic particles and a binder in a solvent, include mechanical agitation methods by a ball mill, a beads mill, a planetary ball mill, a vibration ball mill, a sand mill, a colloid mill, an attritor, a roll mill, high-speed impeller dispersion, a disperser, a homogenizer, a high speed impact mill, ultrasonic dispersion, an agitation blade, and the like. Examples of the method of applying the coating fluid on the porous film include a bar coater method, a gravure coater method, a minor diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, and a spray coating method.

When the surface of the porous film is subjected to a surface treatment before applying a coating fluid, it becomes easy to apply a coating fluid, and adhesion properties of a heat resistant porous layer with the porous film may increase. Examples of the surface treatment method include a corona discharge treatment method, a mechanical surface roughening method, a solvent treatment method, an acid-treatment method, and an ultraviolet oxidation method.

Examples of the method of removing the solvent from the applied film obtained by the application include a method of drying at a temperature less than the melting point of the porous film and a method of drying under reduced pressure.

<Protective Porous Layer>

The protective porous layer is in contact with a heat resistant porous layer. The protective porous layer plays a role in protecting a heat resistant porous layer. The protective porous layer can protect a heat resistant porous layer particularly by suppression of abrasion of a device member such as a winding roller in winding a laminated film, suppression of adsorption of moisture induced by a binder in the heat resistant porous layer, and suppression of adhesion of dust and the like induced by plate-like inorganic particles in the heat resistant porous layer.

The protective porous layer preferably consists of particles, whereby the frictional force between sheets during producing an electrode group is further lowered. Herein, the surface of the heat resistant porous layer may not be completely covered by the particles, and the particles may not be closely adjacent to each other. The particles in the protective porous layer preferably have an average particle diameter of from 0.01 $\mu$m to 3 $\mu$m, and more preferably from 0.01 $\mu$m to 0.5 $\mu$m. The particles have such an average particle diameter, whereby lithium ion permeability is further increased while the protective porous layer has a role in protecting the heat resistant porous layer.

The protective porous layer is preferably an electrochemically stable layer. The material constituting the protective porous layer includes a material that would not degenerate even when a lithium ion secondary battery is maintained at a state of charge of 4.2 to 4.5 V for several hours using the material formed into a porous film as a separator of the battery. Examples of such a material include polyolefins such as polyethylene and polypropylene; fluorine-containing polymers such as polytetrafluoroethylene and a copolymer of tetrafluoroethylene-hexafluoropropylene; water-soluble cellulose such as carboxymethylcellulose; polyolefin copolymers such as an ethylenepropylene copolymer; and aromatic polyesters such as polyethylene terephthalate. Among them, polyolefins and fluorine-containing polymers are preferable.

The protective porous layer preferably has a porosity of from 30vol% to 80vol%, and more preferably from 50vol% to 80vol%. By setting the porosity within the above-mentioned range, lithium ion permeability is further improved while the protective porous layer exerts a function for protecting the heat resistant porous layer. Incidentally, the porosity of the protective porous layer can be determined by the following formula (3).

$$Pv_3 \ (\%) \ = \ \{(Va_3 - Vt_3)/Va_3\} \times 100 \qquad (3)$$

$Pv_3$ (%): Porosity of Heat Resistant Porous Layer (vol%)
$Va_3$: Apparent Volume of Heat Resistant Porous Layer
$Vt_3$: Theoretical Volume of Heat Resistant Porous Layer

Herein, $Va_3$ can be calculated by the values of the length, width and thickness of the heat resistant porous film, and $Vt_3$ can be calculated by the values of the weight of the heat resistant porous film, weight ratio of the constituent materials and true specific gravity of each constituent material.

The protective porous layer preferably has the thickness of from 0.02 $\mu$m to 5 $\mu$m, and more preferably from 0.02 $\mu$m to 3 $\mu$m. By setting the thickness within the above-mentioned range, lithium ion permeability is further improved while the protective porous layer exerts a function for protecting the heat resistant porous layer.

<Method for Forming Protective Porous Layer>

The protective porous layer can be formed by applying on the surface of the heat resistant porous layer a coating fluid in which the particles constituting the protective porous layer are dispersed in a solvent, and then removing the solvent by drying or the like.

Examples of the solvent in the coating fluid include NMP, N,N-dimethylformamide, N,N-dimethylacetamide, water, ethanol, toluene, hot xylene, and hexane. For the dispersion stabilization and improvement in coatability of the coating fluid, various additives including a dispersant such as a surfactant; a thickener; a wetting agent; an antifoaming agent; and a pH adjusting agent including acid or alkali and the like may be added to the coating fluid. The additives are preferably removed during solvent removal. The additives may remain in the heat resistant porous layer, on the use of a non-aqueous electrolyte secondary battery, so long as they are electrochemically stable, do not inhibit a battery reaction and are stable up to 200°C or so.

Examples of the method for producing a coating fluid, i.e., the method of dispersing the particles constituting the protective porous layer in a solvent, include mechanical agitation methods by a ball mill, a beads mill, a planetary ball mill, a vibration ball mill, a sand mill, a colloid mill, an attritor, a roll mill, high-speed impeller dispersion, a disperser, a homogenizer, a high speed impact mill, ultrasonic dispersion, an agitation blade, and the like. Examples of the method of applying the coating fluid on the surface of the heat resistant porous layer include a bar coater method, a gravure coater method, a minor diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, and a spray coating method.

Examples of the method of removing the solvent from the applied film obtained by the application include a method of drying at a temperature less than the melting point of the porous film and a method of drying under reduced pressure.

<Separator>

In accordance with the present invention, a film that is highly superior in heat resistance with little strength degradation at up to 200°C or so and retains its shape at up to 300°C or so is obtained. In a non-aqueous electrolyte secondary battery, since battery characteristics such as cycle capacity are increased, the film is particularly useful as a separator for a non-aqueous electrolyte secondary battery such as a lithium ion secondary battery and a lithium polymer secondary battery. It can be also well used as a separator for an aqueous secondary battery, a non-aqueous primary battery or a capacitor.

<Non-Aqueous Electrolyte Secondary Battery>

The non-aqueous electrolyte secondary battery of the present invention is a non-aqueous electrolyte secondary battery comprising a positive electrode, a negative electrode, a separator located between the positive electrode and the negative electrode, and an electrolyte, wherein the separator is the laminated film of the present invention. Next, the non-aqueous electrolyte secondary battery of the present invention is described with reference to a lithium ion secondary battery.

The lithium ion secondary battery can be produced by laminating or laminating and winding a positive electrode sheet, a separator, a negative electrode sheet and a separator in this order to obtain an electrode group, storing the electrode group in a battery case such as a battery can, and injecting an electrolyte solution into the battery case. Herein, the laminated film of the present invention is used as a separator. Upon lamination of the positive electrode sheet, the separator, the negative electrode sheet and the separator, when these are laminated so that a protective porous layer of the laminated film is located on the side where the positive electrode sheet is, a non-aqueous electrolyte secondary battery, in which the protective porous layer of the laminated film is located on the side where the positive electrode is, is obtained. The protective porous layer is located on the side where the positive electrode is, thereby further increasing electrochemical stability of the battery.

Examples of the shape of the electrode group include shapes in which the cross section of the electrode group cut in a direction perpendicular to the axis of winding is circular, elliptic, rectangular, or a rectangular shape without sharp corners. Examples of the shape of the battery include shapes such as paper type, coin type, cylindrical type, and prismatic type.

<Positive Electrode>

As the positive electrode sheet, an electrode in which a positive electrode mixture containing a positive electrode active material, a conductive material and a binder is laminated on a positive electrode collector is usually used. The positive electrode mixture preferably contains a material capable of being doped and dedoped with lithium ions as the positive electrode active material, contains a carbonaceous material as the conductive material, and contains a thermoplastic resin as the binder.

The positive electrode active material includes a material capable of being doped and dedoped with lithium ions. Specific examples of the positive electrode active material include mixed metal oxides containing at least one transition metal selected from V, Mn, Fe, Co, Ni, Cr and Ti and an alkali metal element such as Li or Na. The positive electrode active material is preferably a mixed metal oxide having an $\alpha$-NaFeO$_2$ structure as the matrix and more preferably lithium cobaltate, lithium nickelate, or a lithium mixed metal oxide in which a part of nickel in lithium nickelate is replaced by other elements such as Mn and Co, from the viewpoint of having a high average discharge potential. The positive electrode active material also includes a mixed metal oxide having a spinel structure such as lithium manganese spinel as the matrix.

The binder includes a thermoplastic resin. Specific examples of the thermoplastic resin include PVdF, a copolymer of vinylidene fluoride, polytetrafluoroethylene, a copolymer of tetrafluoroethylene-hexafluoropropylene, a copolymer of tetrafluoroethylene-perfluoroalkyl vinyl ether, a copolymer of ethylene-tetrafluoroethylene, a copolymer of vinylidene fluoride-hexafluoropropylene-tetrafluoroethylene, a thermoplastic polyimide, carboxymethylcellulose, polyethylene, and polypropylene.

The conductive material includes a carbonaceous material. Specific examples of the carbonaceous material include natural graphite, artificial graphite, cokes, and carbon blacks such as acetylene black and Ketchen black, and they may be used by mixing two or more kinds.

The positive electrode collector includes A1, stainless steel, and the like, and A1 is preferable from the viewpoint of lightness, cheapness, and ease of processing. The method of laminating the positive electrode mixture on a positive electrode collector includes a pressure molding method, a method of forming a positive electrode mixture paste further using a solvent or the like, applying the paste on a positive electrode collector, subjecting it to drying, and then pressure-bonding by pressing, and the like.

<Negative Electrode>

The negative electrode sheet should be capable of being doped and dedoped with lithium ions at a lower potential than that of the positive electrode sheet. The negative electrode includes an electrode in which a negative electrode mixture containing a negative electrode material is laminated on a negative electrode collector and an electrode made of a negative electrode material alone. The negative electrode material includes materials capable of being doped and dedoped with lithium ions at a lower potential than that of the positive electrode, which is a carbonaceous material, a chalcogen compound (such as an oxide or sulfide), a nitride, a metal or alloy. These negative electrode materials may be also mixed and used.

The negative electrode materials are exemplified as follows. Examples of the carbonaceous material specifically include graphites such as natural graphite and artificial graphite, cokes, carbon black, pyrolytic carbons, carbon fiber, and burned polymer materials. Examples of the oxide specifically include silicon oxides represented by the formula $SiO_x$ (wherein x is a positive real number) such as $SiO_2$ and SiO, titanium oxides represented by the formula $TiO_x$ (wherein x is a positive real number) such as $TiO_2$ and TiO, vanadium oxides represented by the formula $VO_x$ (wherein x is a positive real number) such as $V_2O_5$ and $VO_2$, iron oxides represented by the formula $FeO_x$ (wherein x is a positive real number) such as $Fe_3O_4$, $Fe_2O_3$ and FeO, tin oxides represented by the formula $SnO_x$ (wherein x is a positive real number) such as $SnO_2$ and SnO, tungsten oxides represented by the general formula $WO_x$ (wherein x is a positive real number) such as $WO_3$ and $WO_2$, and composite metal oxides containing lithium, titanium and/or vanadium such as $Li_4Ti_5O_{12}$ and $LiVO_2$ (including $Li_{1.1}V_{0.9}O_2$). Examples of the sulfide specifically include titanium sulfides represented by the formula $TiS_x$ (wherein x is a positive real number) such as $Ti_2S_3$, $TiS_2$ and TiS, vanadium sulfides represented by the formula $VS_x$ (wherein x is a positive real number) such as $V_3S_4$, $VS_2$ and VS, iron sulfides represented by the formula $FeS_x$ (wherein x is a positive real number) such as $Fe_3S_4$, $FeS_2$ and FeS, molybdenum sulfides represented by the formula $MoS_x$ (wherein x is a positive real number) such as $Mo_2S_3$ and $MoS_2$, tin sulfides represented by the formula $SnS_x$ (wherein x is a positive real number) such as $SnS_2$ and SnS, tungsten sulfides represented by the formula $WS_x$ (wherein x is a positive real number) such as $WS_2$, antimony sulfides represented by the formula $SbS_x$ (wherein x is a positive real number) such as $Sb_2S_3$, and selenium sulfides represented by the formula $SeS_x$ (wherein x is a positive real number) such as $Se_5S_3$, $SeS_2$ and SeS. Examples of the nitride specifically include lithium-containing nitrides such as $Li_3N$ and $Li_{3-x}A_xN$ (wherein A is Ni and/or Co, and 0 < x < 3.). These carbonaceous materials, oxides, sulfides and nitrides may be used in combination of two or more kinds. These may be crystalline or amorphous. These carbonaceous materials, oxides, sulfides and nitrides may be mainly laminated on the negative electrode collector and used as an electrode.

Examples of the metal specifically include lithium metals, silicon metals, and tin metals. Examples of the alloy include lithium alloys such as Li-Al, Li-Ni and Li-Si, silicon alloys such as Si-Zn, tin alloys such as Sn-Mn, Sn-Co, Sn-Ni, Sn-Cu and Sn-La, and alloys such as $Cu_2Sb$ and $La_3Ni_2Sn_7$. These metals and alloys are mainly used alone as an electrode (for example, used in a sheet form).

From the viewpoint of having high potential flatness of the obtained secondary battery, low average discharge potential and good cycling characteristics, the negative electrode material is preferably a carbonaceous material consisting primarily of graphites such as natural graphite and artificial graphite. Examples of the shape of the carbonaceous material include a thin section shape such as natural graphite, a spherical shape such as mesocarbon microbeads, a fibrous shape such as graphitized carbon fiber, and an aggregate of fine powders.

The negative electrode mixture may include a binder, if necessary. The binder includes a thermoplastic resin. The thermoplastic resin specifically includes PVdF, a thermoplastic polyimide, carboxymethylcellulose, polyethylene, polypropylene, and the like.

The material for the negative electrode collector includes Cu, Ni, stainless steel, etc., and is preferably Cu, from the viewpoint of unlikeliness of forming an alloy with lithium and easiness of being processed into a thin film. The method of laminating the negative electrode mixture on a negative electrode collector is the same as in the positive electrode and includes a pressure molding method, a method of forming a negative electrode mixture paste further using a solvent or the like, applying the paste on a negative electrode collector, subjecting it to drying, and then pressure-bonding by pressing, and the like.

<Electrolyte Solution>

The electrolyte solution usually contains an electrolyte and an organic solvent. Examples of the electrolyte include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (wherein BOB is bis(oxalato)borate), lower aliphatic lithium carboxylate, and $LiAlCl_4$, and a mixture of two or more kinds of the electrolytes may be used. Among them, one or more fluorine-containing lithium salts selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)_3$ are usually used.

Examples of the organic solvent used in the electrolyte solution include carbonates such as propylene carbonate, ethylene carbonate (hereinafter may be referred to as EC), dimethyl carbonate (hereinafter may be referred to as DMC), diethyl carbonate, ethylmethyl carbonate (hereinafter may be referred to as EMC), 4-trifluoromethyl-1,3-dioxolan-2-one and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran and 2-methyltetrahydrofuran; esters such as methyl formate, methyl acetate and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide and 1,3-propanesultone; and a compound in which a fluorine substituent is further introduced into the above-mentioned organic solvents. A mixed solvent in which two or more kinds of them are mixed is usually used. Among them, a mixed solvent containing carbonates is preferred, and a mixed solvent of a cyclic carbonate and a non-cyclic carbonate or a mixed solvent of a cyclic carbonate and ethers is further preferred. As the mixed solvent of the cyclic carbonate and the non-cyclic carbonate, preferably, a mixed solvent containing EC, DMC and EMC is used from the viewpoints of wide operation temperature range, superior loading characteristics, and high decomposition resistance even in the case of using graphite materials such as natural graphite and artificial graphite as the negative electrode active material. In view of obtaining particularly superior safety improvement effect, an electrolyte solution containing an organic solvent having a fluorine-containing lithium salt such as $LiPF_6$ and a fluorine substituent is preferably used. A mixed solvent containing ethers having a fluorine substituent such as pentafluoropropyl methyl ether and 2,2,3,3-tetrafluoropropyl difluoromethyl ether and DMC is also superior in large current discharge characteristics and thus further preferred.

**Examples**

Next, the present invention is further specifically described with reference to examples. The present invention is not limited to these examples.

Production Example 1 (Preparation of Positive Electrode Sheet)

A lithium mixed metal oxide represented by $LiCoO_2$ was used as a positive electrode active material. Acetylene black was used as a conductive material. Polytetrafluoroethylene and carboxymethylcellulose were used as a binder. Water was used as a solvent. An Al foil was used as a collector (positive electrode collector). The positive electrode active material, the conductive material, the binder and the solvent were mixed to obtain a positive electrode mixture paste. The weight ratio of positive electrode active material : conductive material : binder : solvent in the positive electrode mixture paste was 92 : 3 : 5 : 45. The weight ratio of polytetrafluoroethylene : carboxymethylcellulose in the binder was 9 : 1.
This positive electrode mixture paste was applied on the both surfaces of the Al foil and dried to obtain a dried sheet, and the sheet was pressed with a roller press machine, followed by welding an aluminum lead thereto, so that a positive electrode sheet was obtained.

Production Example 2 (Preparation of Negative Electrode Sheet)

Natural graphite was used as a negative electrode material. Carboxymethylcellulose was used as a binder. Water was used as a solvent. A copper foil was used as a collector (negative electrode collector). The negative electrode material, the binder and the solvent were mixed to obtain a negative electrode mixture paste. The weight ratio of negative electrode material : binder : solvent in the negative electrode mixture paste was 98 : 2 : 110.
This negative electrode mixture paste was applied on the both surfaces of the copper foil and dried to obtain a dried sheet, and the sheet was pressed with a roller press machine, followed by welding a copper lead thereto, so that a negative electrode sheet was obtained.

Production Example 3 (Preparation of Electrolyte Solution)

The electrolyte solution was prepared by dissolving $LiPF_6$ serving as an electrolyte in a mixed solvent of EC, DMC and EMC at a volume ratio of 16 : 10 : 74 such that the concentration thereof is set to 1.3 mol/l.

Production Example 4 (Preparation and Evaluation of Non-Aqueous Electrolyte Secondary Battery)

An electrode group obtained by laminating the positive electrode sheet of Production Example 1, a separator, the negative electrode sheet of Production Example 2 and a separator in this order and winding the resultant, was stored in a battery case, and then the electrolyte solution of Production Example 3 was injected into the can, to produce a lithium ion secondary battery. A charge-discharge test and a cycle test of the secondary battery were carried out in the following conditions.

<Charge-Discharge Test>

Test Temperature: 20°C

Maximum Charge Voltage: 4.2 V, Charging Time: 4 hours, Charging Current: 1 mA/cm$^2$
Minimum Discharge Voltage: 3.0 V, Constant Current Discharge, Discharging Current: 1 mA/cm$^2$

<Cycle Test>

Test Temperature: 20°C
Maximum Charge Voltage: 4.2 V, Charging Time: 4 hours, Charging Current: 15 mA/cm$^2$
Minimum Discharge Voltage: 3.0 V, Constant Current Discharge, Discharging Current: 10 mA/cm$^2$
Cycle Number: 50 times

$$\text{Maintenance Ratio of Discharge Capacity (\%)} = \text{Discharge}$$

$$\text{Capacity at Fiftieth Cycle/Discharge Capacity at First Cycle} \times 100$$

Comparative Example 1

As a porous film having a shutdown function, a polyethylene porous film was used (thickness of 15 $\mu$m, porosity of 50%). As plate-like inorganic particles, $\alpha$-alumina (average particle diameter of 0.06 $\mu$m, aspect ratio of 70) was used. An acrylic resin was used as a binder. Water was used as a solvent. The plate-like inorganic particles, the binder and the solvent were mixed to prepare a coating fluid (1). The weight ratio of plate-like inorganic particles : binder : solvent in the coating fluid (1) was 18 : 2 : 80. The coating fluid (1) was applied on one surface of the porous film and dried at 70°C, to form a heat resistant porous layer, to obtain a comparative film 1. As a coating machine, a bar coater was used. The heat resistant porous layer in the comparative film 1 had the thickness of 4.8 $\mu$m and a porosity of 79vol%. The volume ratio of the plate-like inorganic particles to the total volume of the inorganic filler and the binder in the heat resistant porous layer was 80vol%.

Using the comparative film 1 as a separator, a comparative secondary battery was prepared according to Production Example 4. Herein, the heat resistant porous layer in the comparative film 1 was located on the side where the positive electrode sheet was. A charge-discharge test of the comparative secondary battery was carried out. The obtained discharge capacity was defined as 100. A cycle test was carried out on the comparative secondary battery. The obtained maintenance ratio of discharge capacity was defined as 100. After carrying out a cycle test, the battery was disassembled, and the winding condition of the electrode group was visually confirmed. Then, looseness was found.

Example 1

As a porous film having a shutdown function, a polyethylene porous film was used (thickness of 15 $\mu$m, porosity of 50%). As plate-like inorganic particles, $\alpha$-alumina (average particle diameter of 0.06 $\mu$m, aspect ratio of 70) was used. An acrylic resin was used as a binder. Water was used as a solvent. The plate-like inorganic particles, the binder and the solvent were mixed to prepare a coating fluid (1). The weight ratio of plate-like inorganic particles : binder : solvent in the coating fluid (1) was 18 : 2 : 80. The coating fluid (1) was applied on one surface of the porous film and dried at 70°C, to form a heat resistant porous layer. As a coating machine, a bar coater was used. The heat resistant porous layer had the thickness of 4.6 $\mu$m and a porosity of 78vol%. The volume ratio of the plate-like inorganic particles to the total volume of the plate-like inorganic particles and the binder in the heat resistant porous layer was 80vol%.

Particles of polytetrafluoroethylene (average particle diameter of 0.3 $\mu$m) were used as particles constituting the protective porous layer. Water was used as a solvent (dispersion medium). The particles of polytetrafluoroethylene and the solvent were mixed and dispersed to prepare a coating fluid (2). The weight ratio of particles : solvent in the coating fluid (2) was 5 : 95. The coating fluid (2) was applied on one surface of the heat resistant porous layer and dried at 70°C, to form a protective porous layer, to obtain a laminated film 1. As a coating machine, a bar coater was used. The protective porous layer had the thickness of 0.5 $\mu$m and a porosity of 70vol%.

Using the laminated film 1 as a separator, a lithium ion secondary battery 1 was prepared according to Production Example 4. Herein, the protective porous layer in the laminated film 1 was located on the side where the positive electrode sheet was. A charge-discharge test of the lithium ion secondary battery 1 was carried out. The ratio of the obtained discharge capacity was nearly 100, relative to 100 being that of the comparative secondary battery, and difference in the capacity was not found. A cycle test of the lithium ion secondary battery 1 was carried out. The ratio of the obtained maintenance ratio of discharge capacity was 103, relative to 100 being that of the comparative secondary battery, and increase in the maintenance ratio of discharge capacity was found. After carrying out a cycle test, the battery was disassembled, and the winding condition of the electrode group was visually confirmed. Then, looseness was not found.

Example 2

The same procedures were carried out as in Example 1 except for using particles of polyethylene (average particle diameter of 0.6 $\mu$m) as the particles constituting the protective porous layer, to obtain a laminated film 2. The protective porous layer had the thickness of 0.6 $\mu$m and a porosity of 68vol%.

Using the laminated film 2 as a separator, a lithium ion secondary battery 2 was prepared according to Production Example 4. Herein, the protective porous layer in the laminated film 2 was located on the side where the positive electrode sheet was. A charge-discharge test of the lithium ion secondary battery 2 was carried out. The ratio of the obtained discharge capacity was nearly 100, relative to 100 being that of the comparative secondary battery, and difference in the capacity was not found. A cycle test of the lithium ion secondary battery 2 was carried out. The ratio of the obtained maintenance ratio of discharge capacity was 104, relative to 100 being that of the comparative secondary battery, and increase in the maintenance ratio of discharge capacity was found. After carrying out a cycle test, the battery was disassembled, and the winding condition of the electrode group was visually confirmed. Then, looseness was not found.

## INDUSTRIAL APPLICABILITY

When the laminated film of the present invention is used as a separator for a non-aqueous electrolyte secondary battery, the frictional force between sheets during producing an electrode group by stacking a positive electrode sheet, a separator, a negative electrode sheet and a separator in this order and winding the resultant can be lowered, and the electrode group in which the positive electrode sheet, the separator and the negative electrode sheet are more closely attached can be obtained. As a result, a secondary battery that is also superior in cycle performance can be obtained. The non-aqueous electrolyte secondary battery having the laminated film of the present invention as a separator has a shutdown function, is superior in heat resistance and also superior in battery characteristics such as cycle properties. Since a device member such as a winding roller is likely to be worn down when winding in the production of the laminated film of the present invention, generation of a metal powder, a resin powder and the like and contamination of these powders into the laminated film can be suppressed. In addition, the laminated film of the present invention is unlikely to absorb moisture, and thus lowering of electric insulation by moisture absorption can be suppressed. Furthermore, the laminated film of the present invention is unlikely to take a charge, and thus adsorption of foreign matter and the like in the atmosphere can be also suppressed. The laminated film of the present invention is also very superior in handling, and the present invention has very much application.

## Claims

1. A laminated film in which a porous film having a shutdown function, a heat resistant porous layer consisting of plate-like inorganic particles and a binder, and a protective porous layer are stacked on each other in this order.

2. The laminated film according to Claim 1, wherein the heat resistant porous layer contains the plate-like inorganic particles in a ratio of not less than 50vol% and less than 100vol% to the total volume of the plate-like inorganic particles and the binder.

3. The laminated film according to Claim 1 or 2, wherein the plate-like inorganic particles have an aspect ratio of from 10 to 100.

4. The laminated film according to any one of Claims 1 to 3, wherein the protective porous layer consists of particles.

5. The laminated film according to Claim 4, wherein the protective porous layer consists of particles having an average particle diameter of from 0.01 $\mu$m to 3 $\mu$m.

6. The laminated film according to any one of Claims 1 to 5, wherein the protective porous layer has a porosity of from 30vol% to 80vol%.

7. The laminated film according to any one of Claims 1 to 6, wherein the porous film has the thickness of from 13 $\mu$m to 17 $\mu$m.

8. The laminated film according to any one of Claims 1 to 7, wherein the heat resistant porous layer has the thickness

of from 1 μm to 10 μm.

9. The laminated film according to any one of Claims 1 to 8, wherein the protective porous layer has the thickness of from 0.02 μm to 5 μm.

10. The laminated film according to any one of Claims 1 to 9, wherein the laminated film is a separator.

11. A non-aqueous electrolyte secondary battery comprising a positive electrode, a negative electrode, a separator located between the positive electrode and the negative electrode, and an electrolyte, wherein the separator is the laminated film according to any one of Claims 1 to 9.

12. The non-aqueous electrolyte secondary battery according to Claim 11, wherein the protective porous layer of the laminated film is located on the side where the positive electrode is.

<div align="center">

**INTERNATIONAL SEARCH REPORT**

</div>

| | |
|---|---|
| | International application No. |
| | PCT/JP2010/072841 |

| A. CLASSIFICATION OF SUBJECT MATTER |
|---|
| *B32B5/32*(2006.01)i, *H01M2/16*(2006.01)i |

According to International Patent Classification (IPC) or to both national classification and IPC

| B. FIELDS SEARCHED |
|---|
| Minimum documentation searched (classification system followed by classification symbols) |
| B32B1/00-43/00, H01M2/00-2/40 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2009-45771 A (Mitsubishi Plastics, Inc.), 05 March 2009 (05.03.2009), claims; paragraphs [0035], [0078] to [0079], [0090], [0100], [0134] to [0135]; examples; drawings (Family: none) | 1-12 |
| A | JP 2009-26733 A (Asahi Kasei Chemicals Corp.), 05 February 2009 (05.02.2009), claims; paragraph [0017]; examples & CN 101600571 A & EP 2116372 A1 & KR 10-2009-0094473 A & US 2010/0285348 A1 & WO 2008/093575 A1 | 1-12 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 February, 2011 (28.02.11) | 08 March, 2011 (08.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/072841

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-143060 A (Asahi Kasei Chemicals Corp.), 02 July 2009 (02.07.2009), claims; paragraph [0032]; examples (Family: none) | 1-12 |
| A | WO 2008/149986 A1 (Asahi Kasei Chemicals Corp.), 11 December 2008 (11.12.2008), claims; paragraph [0031]; examples & CN 101687404 A & EP 2153990 A1 & KR 10-2009-0130885 A & US 2010/0203396 A1 | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009143060 A
- JP 7029563 A
- JP 7304110 A